# EUROPEAN PATENT SPECIFICATION

(11) **EP 1 516 801 B1**
(45) Date of publication and mention of the grant of the patent: **05.08.2009**
(21) Application number: 04425254.2
(22) Date of filing: 05.04.2004
(51) Int. Cl.: B62D 9/02

(54) **A compact on-road vehicle for the transport of people and things with a completely closed body like an automobile, but with freely inclining movement like a motorcycle**
Kompaktes Fahrzeug mit Geschlossenem Aufbau wie bei einem PKW mit freier Kippbewegung wie bei einem Motorrad.
Véhicule compact avec une superstructure fermée comme une voiture et avec une mouvement d'inclinaison comme une motocyclette.

(30) Priority: 14.04.2003 IT mc20030039
(43) Date of publication of application: 23.03.2005
(73) Proprietor: Postacchini, Claudio, 63023 Fermo (IT)
(72) Inventor: Postacchini, Claudio, 63023 Fermo (IT)

(56) References cited:
- US-A- 2 029 735

## Description

This patent application for an industrial invention is for an on-road vehicle for the transport of people and things which combines all the advantages of manageability and compact dimensions of a motorcycle, especially the fundamental advantage of freedom of inclination (without which keeping balance on both straight roads and curves would be impossible) and the irreplaceable advantages of a completely closed body which protects the driver from the cold and inclement weather like a car. As seen on TV, in newspapers and trade shows, many attempts have been made to date but no one has ever solved the problem of obtaining the inclining movement of a motorcycle and the completely closed body of an automobile in a compact vehicle the size of a motorcycle.

The document US 2 029 735 disclose a vehicle according to the preamble of claim 1.

### Some examples:

In some attempts at obtaining the first of the two objectives mentioned above (inclining movement), fully inclining vehicles with more than two wheels and a horizontally pivoting system were presented. They did not, however, fulfil the second objective (completely closed body), because this was incompatible with the deformation undergone by the cycle part of the vehicle in obtaining the first result.

Other attempts, starting off with a two-wheeled vehicle tried to protect the driver with a paraboloid which went from the front of the vehicle, like a windshield, arched over the driver and ended behind the driver's shoulders to the back of the seat. In this case the problem was not solved because on a two-wheeled vehicle, as in the case specified above, you cannot close the body on the sides because the driver could not put his feet on the ground when the vehicle is stopped. In this way the principal characteristic of total protection of the driver is not present because the sides of the vehicle are open. The driver could have been protected by equipping the vehicle with more than two wheels, but it would have to have been wide enough to insure stability thus losing the particularity of the compact dimensions of a moped or motorcycle. We must also mention an attempt made on an automobile with the production of an automobile with a fixed rear wheel axle and an oscillating passenger compartment with an electronic control, and a single wheel on the front axle which follows the inclination of the passenger compartment. A hybrid was obtained, a combination of a fixed part and an oscillating part, but its large dimensions (larger than a normal automobile) which are absolutely required for that type of vehicle, place it completely outside the objective that our invention is aiming for. In fact, our invention developed in the field of motorcycles and our primary objective, as is clear in the context which follows, is to keep it in that field so as to keep similar costs and dimensions adding the characteristic of a completely closed body like an automobile. In other words, we start off with a motorcycle and follow its evolution reaching the desired result without ever leaving that field.

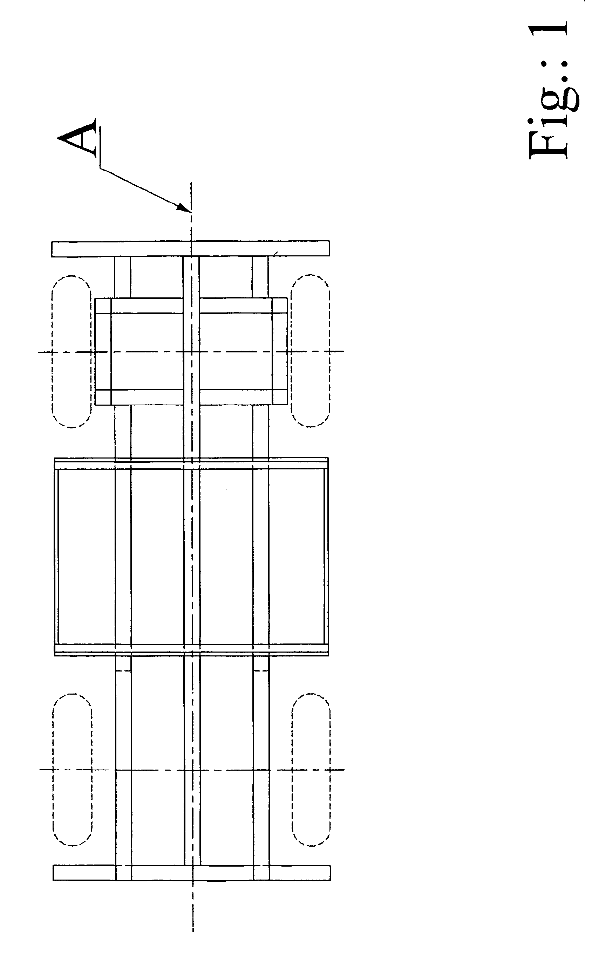

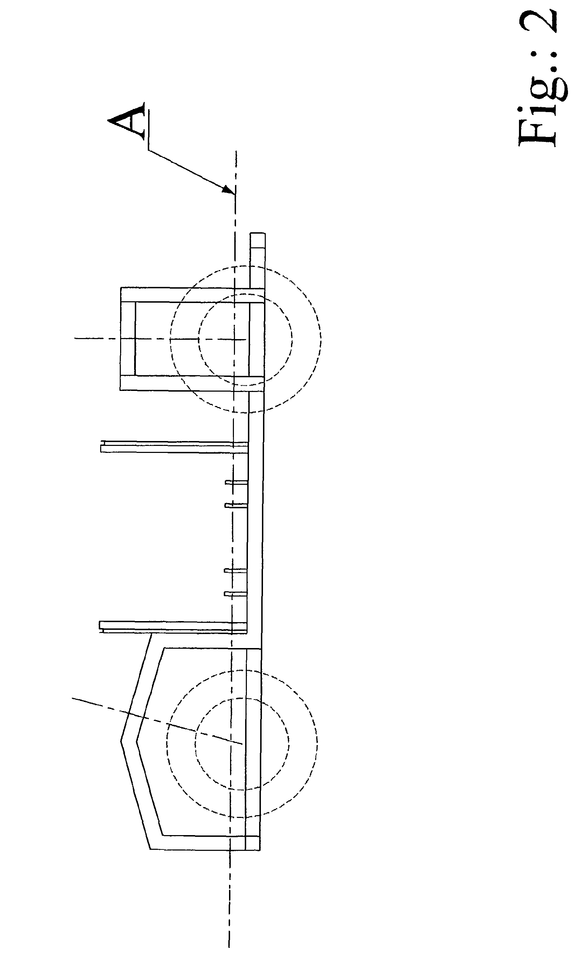

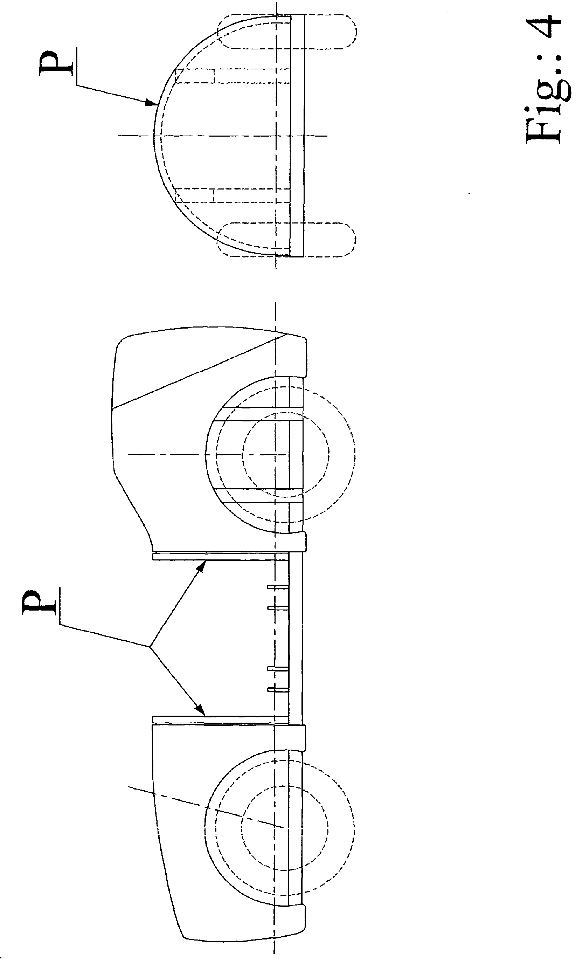

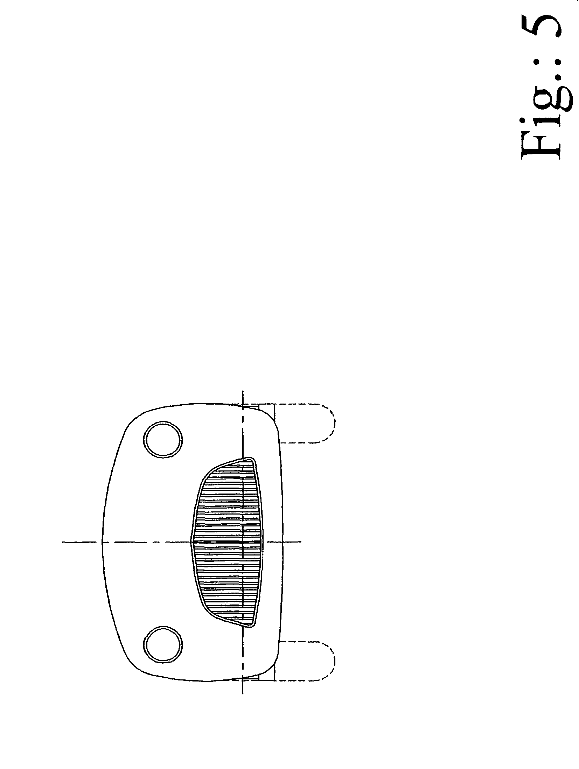

As our invention demonstrates in its entirety, it is not our intention to make an automobile which is different from the others, we want only to make a motorcycle with special characteristics. The solution we adopted, which is the material of this patent application and is described following, solves all the difficulties mentioned to this point, by building a vehicle which preserves the compact dimensions and manageability of a moped or motorcycle while at the same time providing total protection to the driver and a passenger. Freedom of inclination is the specific characteristic of two-wheeled vehicles. The vehicle must also be able to stand in a vertical position when stopped without the driver having to put his feet down outside the vehicle. We will now describe our invention, with the aid of the attached drawings. We believe our invention can satisfy the requirements stated above. The vehicle is composed of two parts: the automobile part and the motorcycle part (we could probably call this new vehicle an AUTOCYCLE). The bottom part, the auto part has got four wheels, two front ones for steering and driving the vehicle and two rear ones; we must note that the solution with two front drive wheels is not part of the patent, it is simply one possible solution; in fact, there could be one or two front or rear wheels (better if two) and they can or cannot be driving, it does not matter. The three wheels, if there are three, can also be distributed one front and two rear or vice versa without invalidating the applicability of the invention. We believe, though, that the four-wheel solution is the best. The four wheels are in a base chassis, which renders them efficient for the role they are assigned (steering or driving), Fig. 1, Fig. 2. The chassis also carries the propelling block, which is anchored to it in a convenient position compatible with the necessary mechanics. The two parts of the fixed body are also put on the base chassis: there is a front part and a rear part which could be used as a trunk, Fig. 4, Fig. 5.

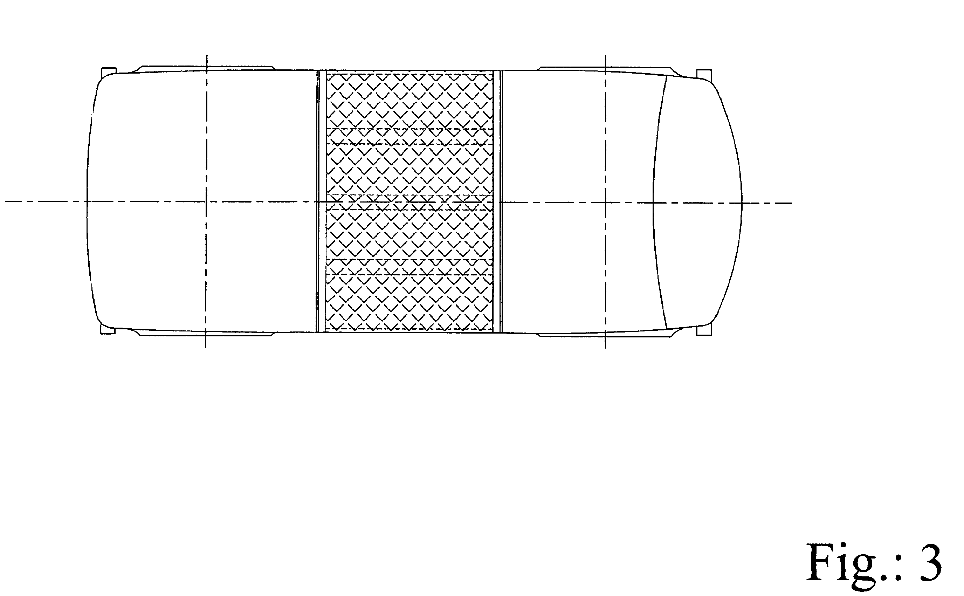

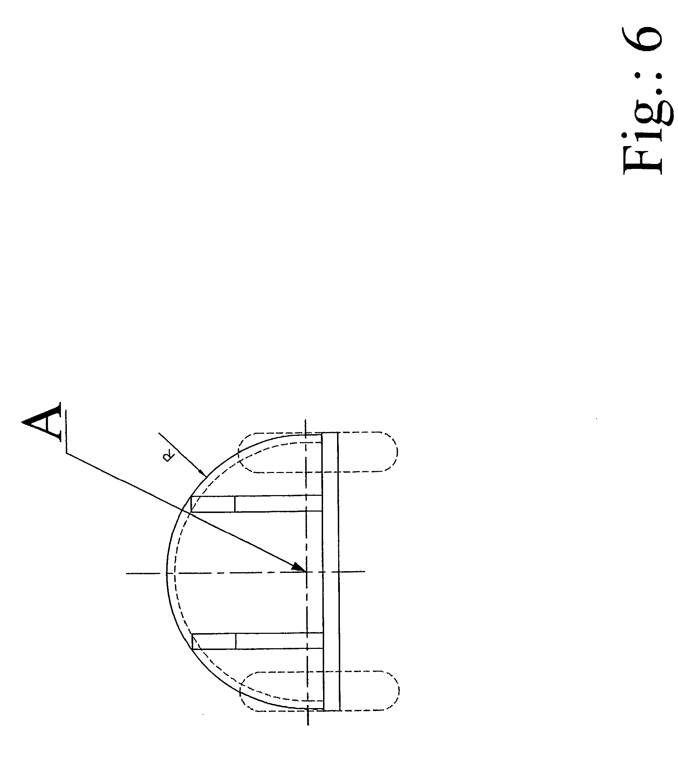

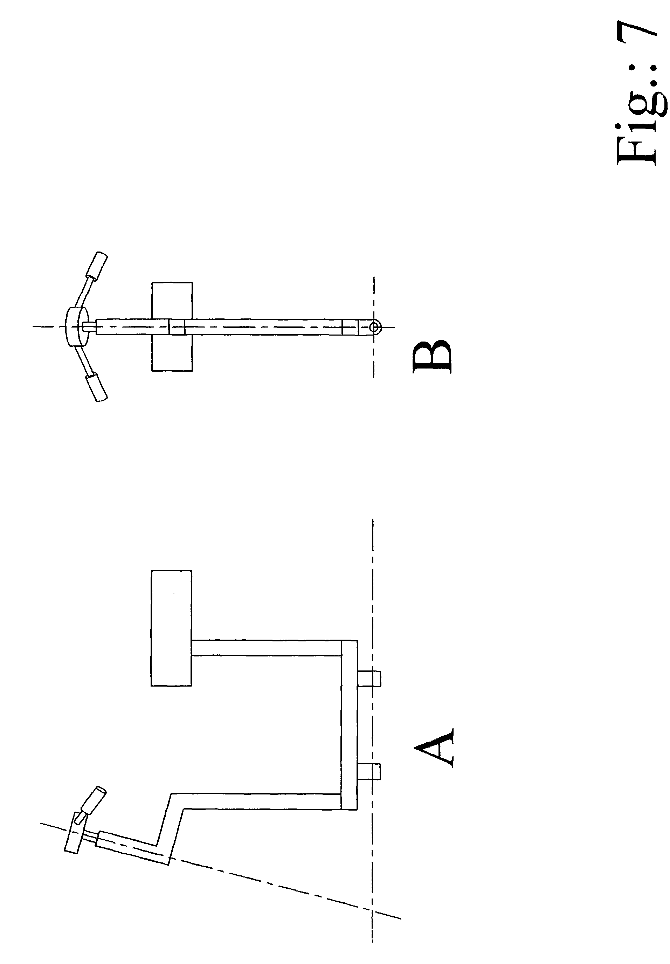

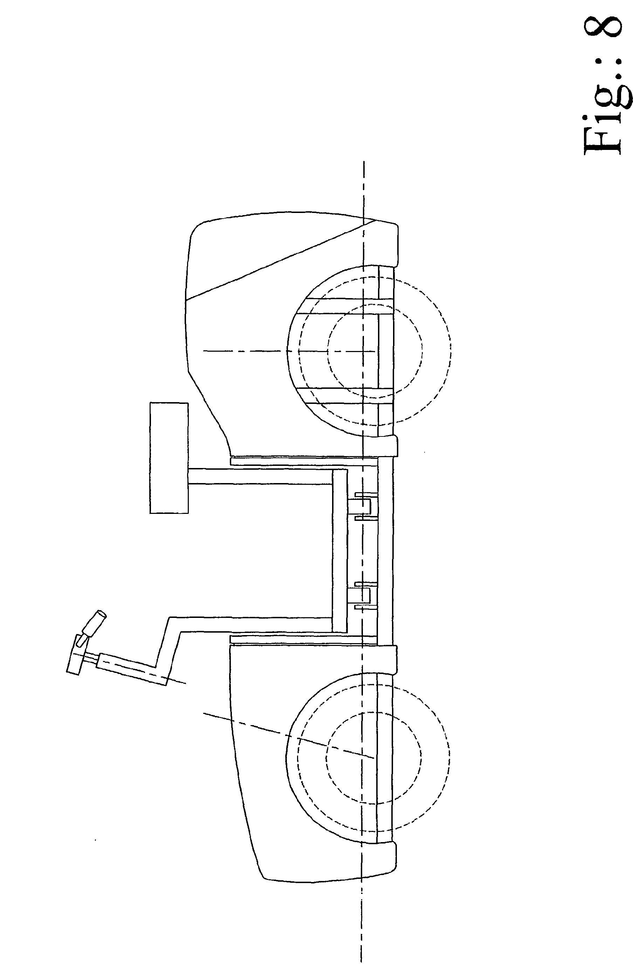

These two parts cover the wheels and can be equipped with headlights, taillights and other accessories required for on-road circulation. Between the two body parts there is an open space of opportune dimensions which goes from one side of the vehicle to the other. This space has a base at the bottom of which is the driver's footrest and if necessary the command pedals for the vehicle can be anchored here, Fig. 3. This space is outlined by two panels which run from side to side, one in front and one in the rear, and close off the two fixed body parts, Fig. 4 (P). The particular shape of these panels has a determining role in the success of the system, as we'll see later. For now we can say that they are semicircular ,with the inside of the semicircle facing upward and centre point is a precise point in the base chassis, Fig 6 (A). The point we're talking about is along the central longitudinal axis of the chassis, at the point in which the semicircular panels intersect it as they cross it. The central axis of the base chassis is at approximately the same height as the wheel axles, perpendicular to them and running longitudinally at the centre of the base chassis, Fig. 1 (A), Fig. 2 (A). Summarising this description to better understand it, so far we have a multiple-wheeled vehicle with a hood covering the front wheels and a trunk covering the rear wheels and in the centre there is an empty compartment with two semicircular panels and a base to use as a footrest. The first part of the vehicle does not incline during movement, it stays in a fixed position like the chassis of an automobile. The second part, the upper part or the cycle part has an opportunely shaped central chassis, i.e. "gooseneck", which supports the steering wheel in the front and the driver's seat in the rear, Fig. 7. At the centre the gooseneck is oriented downward, so that it can be housed in the empty compartment at the centre of the base chassis.

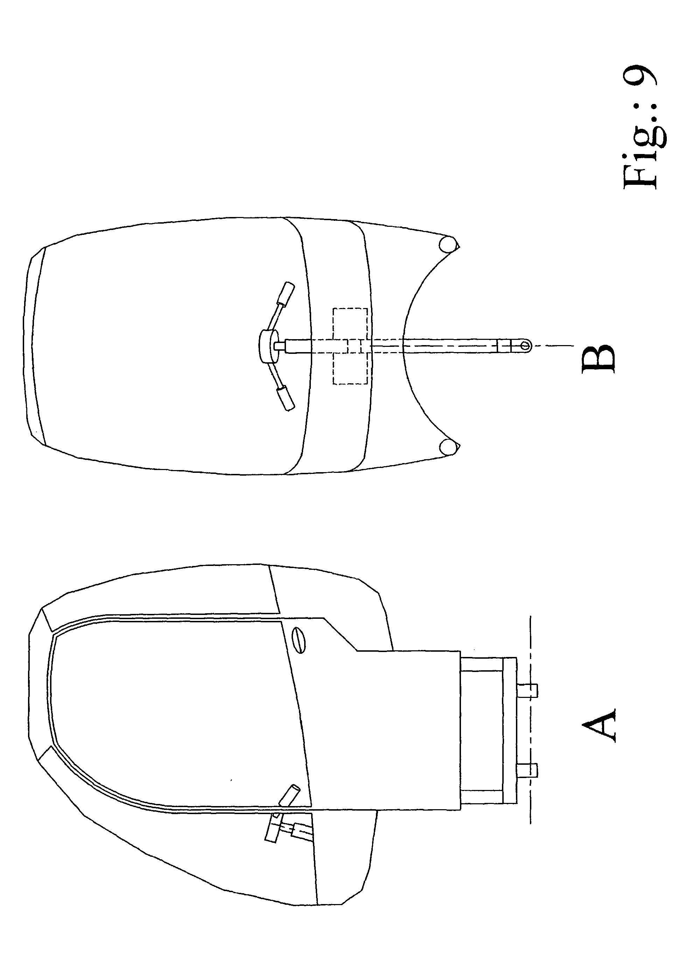

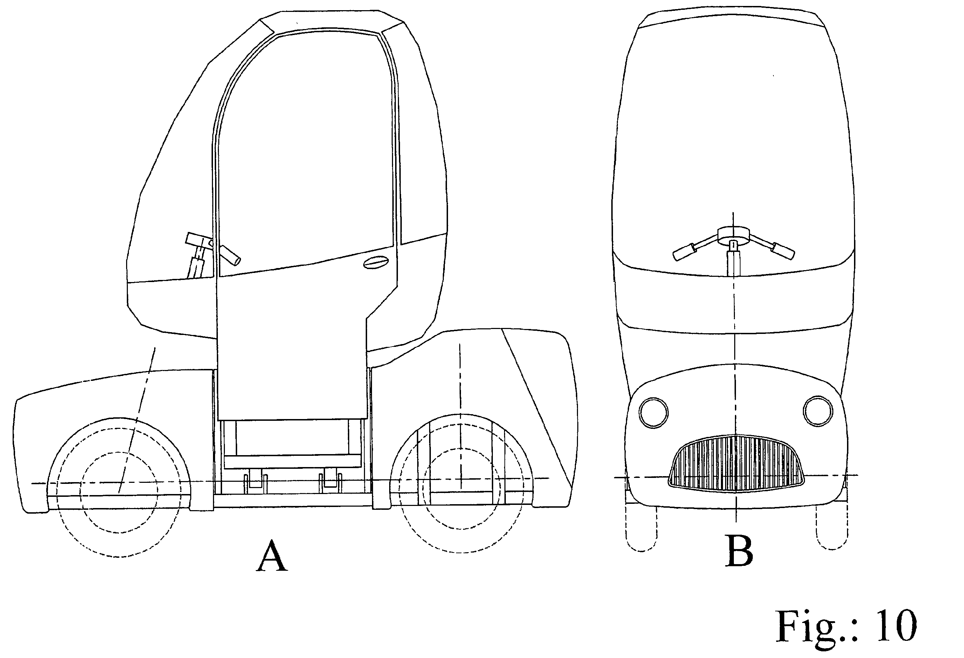

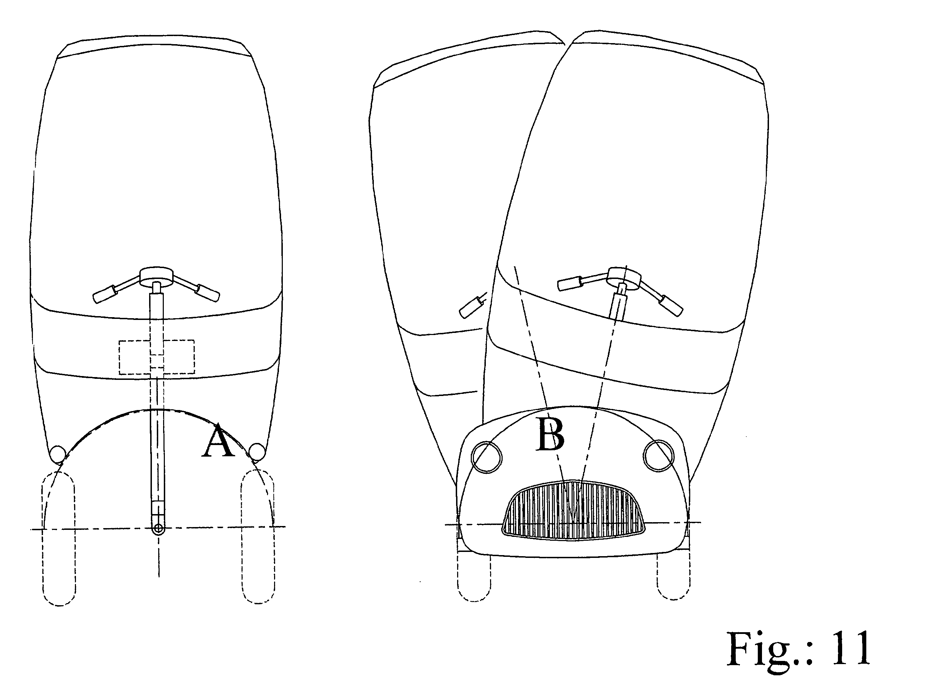

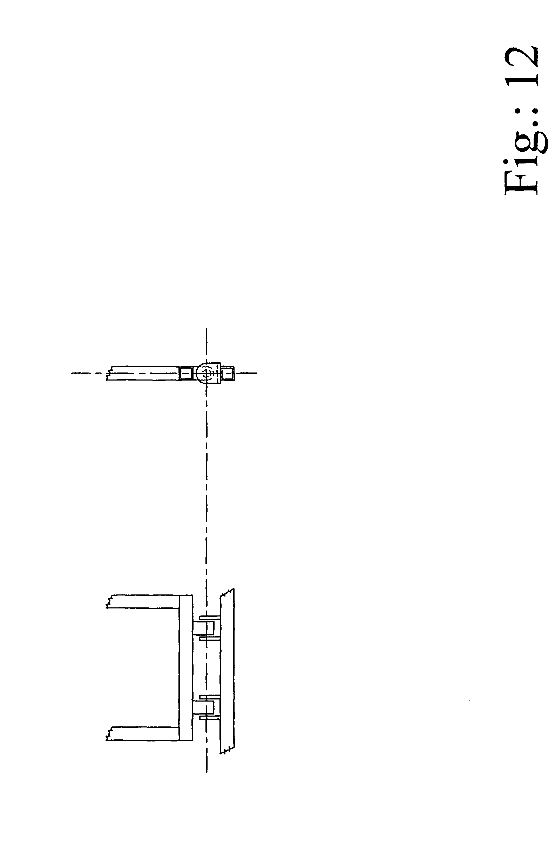

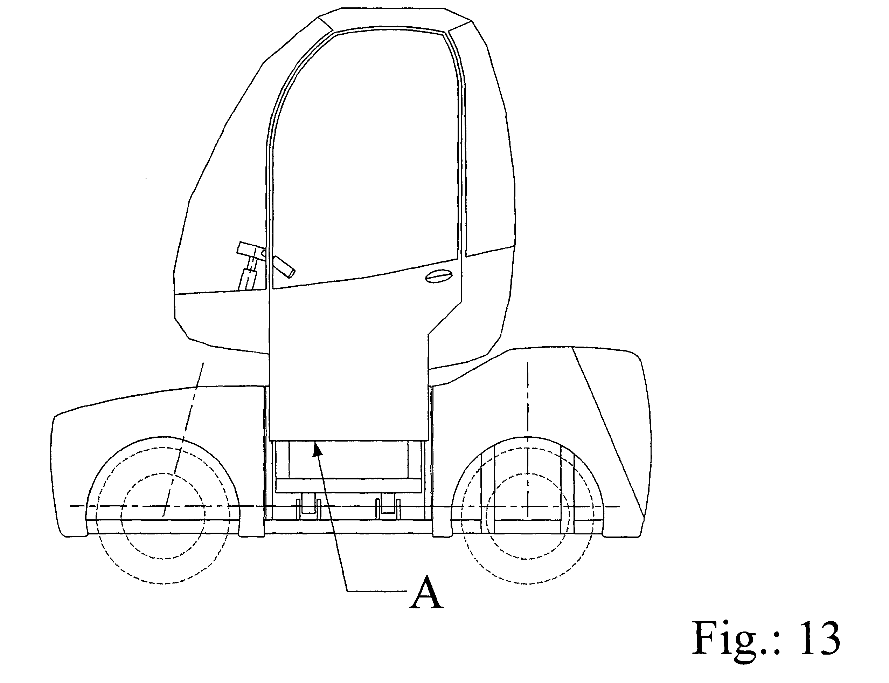

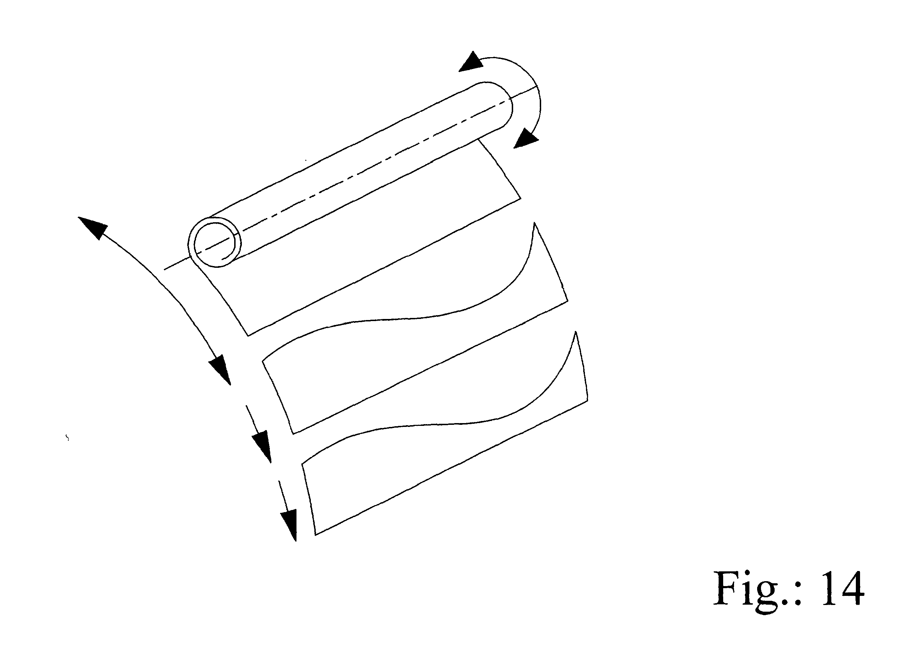

The upper central chassis supports a body, as part of itself: a cabin with several transparent parts, which is oval or multi-sided and defines the space in which the driver can move with ease, covering the steering wheel and its manoeuvring space and the driver's seat, Fig. 9 (A), Fig. 9 (B). The body has doors on both sides which allow the driver to enter and exit the vehicle. The upper central chassis shaped as above goes down into the empty compartment of the base chassis located between the two semicircular panels and is anchored to the base chassis with two hinge joints whose axis is precisely along the longitudinal central axis of the base chassis, Fig. 10. You must remember that this central axis to which the axis of the hinge joints corresponds is the one mentioned previously as the centre of the two semicircular panels. We now have a vehicle with a fixed bottom part (automobile part) on four wheels and an upper part (chassis plus body), i.e. the motorcycle part which oscillates and is attached to the bottom part by two hinge joints along the central axis of the vehicle, Fig. 10, Fig. 11. The oscillating upper body can conform to the fixed bottom part, grazing the two cross panels along the perimeter of the semicircle given that both parts, upper and bottom, have the same centre point, Fig. 12. Using friction-free rubber gaskets the space between the two parts can be filled. It must be mentioned that the upper body with two side doors which at its bottom point reaches the semicircular panels does not close the foot compartment completely on the sides and at the bottom. The bottom line of the two doors must stay higher at the perimeter of the semicircle to allow the vehicle to incline sufficiently, Fig. 13 (A). If it were not this way, the bottom line of the doors would be lower than the fixed body and would touch the ground in the event of strong inclination during movement. To solve this particular problem and close the mobile body we have adopted a pull-down curtain for each side. This curtain, wound up on its own axis is a cylinder which can be easily unwound and wound with a spring, Fig. 14.

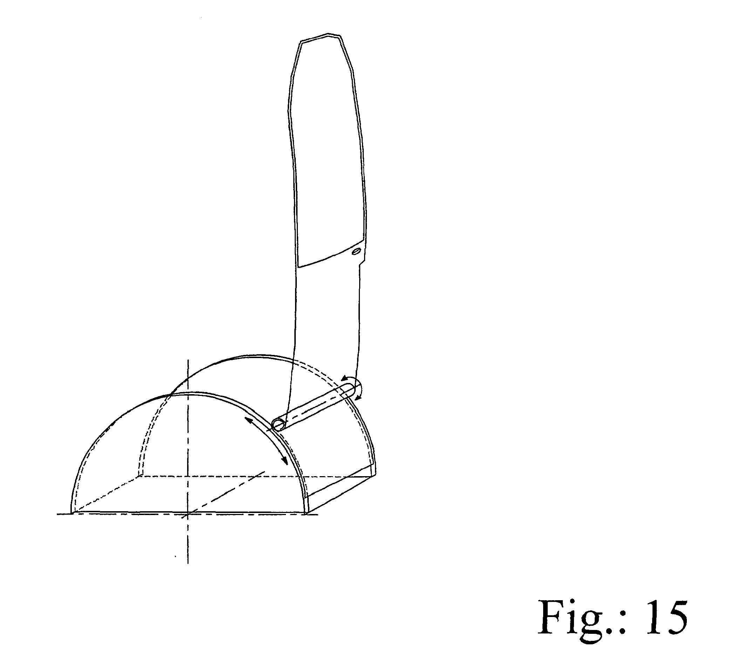

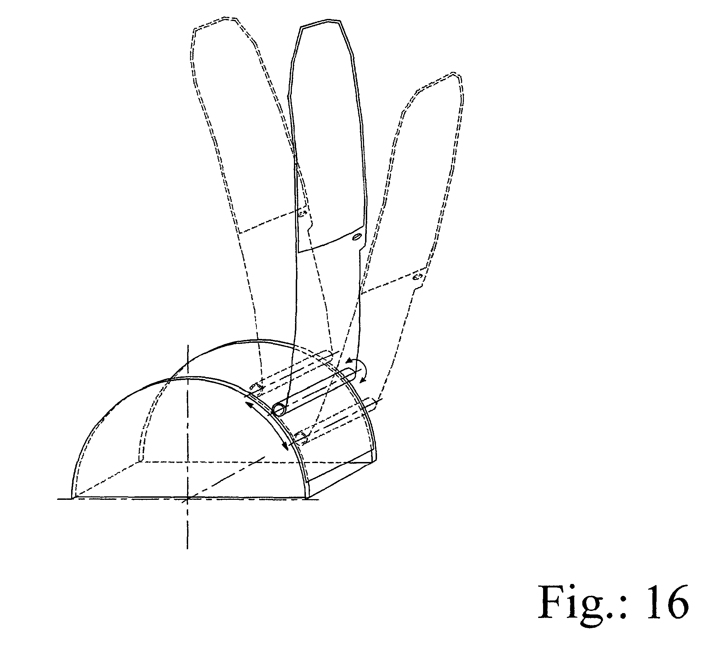

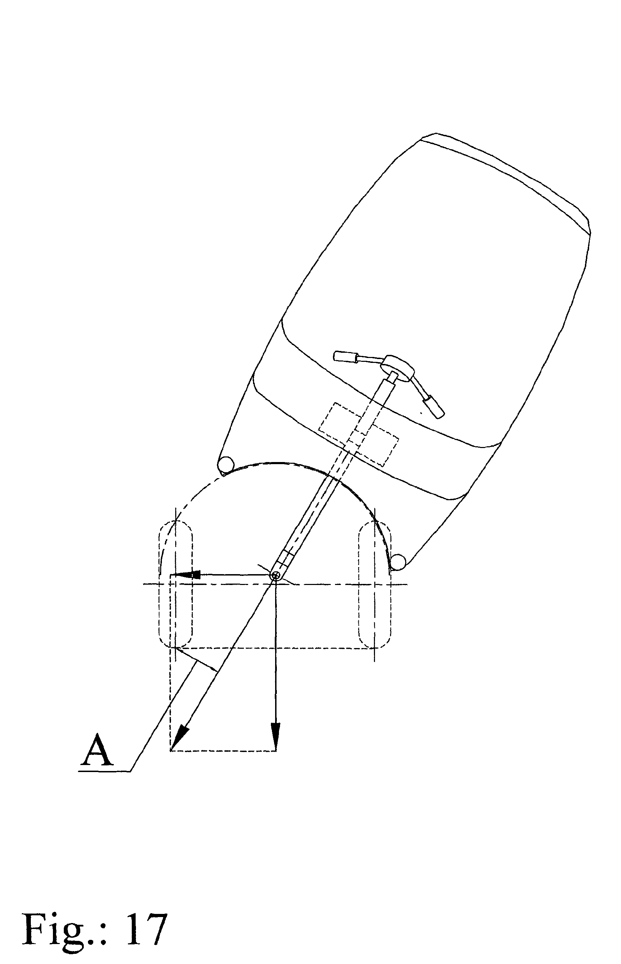

This flexible curtain is located along the bottom edge of the door in an appropriately shaped compartment and at the extreme bottom edge which, when the door is closed, goes from the front panel to the back panel brushing against the semicircular curves of the panels, Fig. 15. When the curtain is pulled out to cover the space left open by the door and hooked toward the bottom by the footrest, it lengthens or is rewound automatically by the spring-rod depending on the inclination of the vehicle. It rolls, it does not slide, along the perimeter of the two semicircular panels keeping the compartment closed at all times thanks to the spring in the rod which keeps the curtain taut at all times. In this way there is always a sort of joint which is covered at all times between the fixed and oscillating bodies, Fig. 16. Everything described above must be so in order to keep the dimensions of the vehicle similar to those of a moped or motorcycle. In fact, only by using an upper body which oscillates above a fixed bottom part can you keep the width of the vehicle to about the same as that of a motorcycle. If the upper part of the vehicle did not oscillate it would overturn on curves and it would be absolutely impossible to use, because the base is too narrow and the centre of gravity is very high. Thanks to this invention the direction of the resultant of gravity and centrifugal force due to the inclination which the upper part of the vehicle can assume always passes through the base of the vehicle defined by a quadrilateral whose highest points are at the points of contact of the wheels with the road, Fig. 17 (A), and therefore the upper part of the vehicle can maintain its hold without overturning. This way we have obtained the possibility of travelling pleasantly on a moped without giving up the comfort and protection of an automobile.

## Claims

1. Three or four wheeled on-road vehicle comprising an upper inclinable part having a cabin for the protection of the driver where the seat of the driver and the steering input member are situated, anchored by two hinged joints along a central longitudinal axis to a bottom fixed part integral with the base vehicle, allowing the upper part to oscillate right or left along its longitudinal axis with respect to the bottom fixed part, **characterized in that**
the bottom fixed part represents a footrest, whereby the driver can
- in case of the vehicle being stopped to remain in a vertical position without having to put the feet outside the vehicle,
- provide the lateral inclination necessary by the upper part on curves,
- compensate surface inclines.

## Patentansprüche

1. Drei- oder vierrädriges Straßenfahrzeug, das aus einem oberen neigbaren Teil mit Kabine zum Schutz des Fahrers besteht, in der sich der Fahrersitz und das Steuer befinden. Die Verankerung an einem mit dem unteren Teil des Fahrzeugs verbundenen festen Teil, durch zwei mit Angeln versehenen Gelenken längs einer zentralen Längsachse, ermöglicht es dem oberen Teil, auf seiner Längsachse gegenüber dem unteren festen Teil nach rechts und links zu schwingen, und ist **dadurch gekennzeichnet, dass:**
Der untere feste Teil als Fußablage dient, sodass der Fahrer
- im Fall des Anhaltens des Fahrzeugs in aufrechter Stellung bleiben kann, ohne die Füße aus dem Fahrzeuges setzen zu müssen,
- in den Kurven die erforderliche Seitenneigung des Oberteils bewirkt,
- die Neigungen des Untergrunds ausgleicht.

## Revendications

1. Véhicule routier à trois ou quatre roues, composé d'une partie supérieure inclinable, avec cabine pour la protection du conducteur, dans laquelle se trouvent le siège du conducteur et l'élément d'insertion de la direction, fixée par deux articulations cylindriques à charnières le long d'un axe central longeant une partie inférieure fixe liée à la base du véhicule, qui permet à la partie supérieure d'osciller à droite et à gauche le long de son axe longitudinal par rapport à la partie fixe inférieure, et **caractérisée par le fait que** la partie inférieure fixe constitue un appui-pieds qui:
- permet au conducteur de rester dans une position verticale, sans devoir mettre les pieds en dehors du véhicule quand le véhicule est arrêté;
- dans les virages, fournit l'inclinaison latérale nécessaire à la partie supérieure;
- compense les inclinaisons du sol.
